# EUROPÄISCHE PATENTSCHRIFT

(11) **EP 2 933 610 B1**
(45) Veröffentlichungstag und Bekanntmachung des Hinweises auf die Patenterteilung: **23.10.2019**
(21) Anmeldenummer: 15162909.4
(22) Anmeldetag: 09.04.2015
(51) Int. Cl.: G01F 1/115

(54) **TURBINENDURCHFLUSSMESSER MIT WEITEM BETRIEBSRADIUS UND FEINER DURCHFLUSSBESTIMMUNG**
TURBINE FLOW METER WITH WIDE OPERATING RANGE AND PRECISE FLOW RATE DETERMINATION
DÉBITMÈTRE DE TURBINE À LARGE PLAGE DE FONCTIONNEMENT ET DÉTERMINATION PRÉCISE DE DÉBIT

(30) Priorität: 10.04.2014 DE 102014206895
(43) Veröffentlichungstag der Anmeldung: 21.10.2015
(73) Patentinhaber: ROBERT BOSCH GMBH, 70442 Stuttgart (DE)
(72) Erfinder: Guilherme, David, 3810-376 Aveiro (PT); Santos, Victor, 3870-166 Murtosa (PT)

(56) Entgegenhaltungen:
- EP-A2- 1 464 927
- US-A- 2 709 755
- US-A- 4 608 871
- US-A- 5 372 048

## Beschreibung

Die Erfindung betrifft einen Turbinendurchflussmesser, umfassend ein Gehäuse mit einer Mantelfläche, mit mindestens einer Zuflussöffnung und mit mindestens einer Abflussöffnung und ein in dem Gehäuse befindlicher Körper, umfassend mindestens ein einen Rotor haltendes Befestigungsteil, wobei der Rotor mit oder auf einer Achse verschiebbar und/oder drehbar ist.

### Stand der Technik

Zur Messung von Durchflussströmen werden oft Turbinendurchflussmesser verwendet. Mit passenden Empfangs- und Auswerteeinheiten ausgestattet, erfassen diese die Drehzahl des Rotors, welche proportional zur mittleren Geschwindigkeit des Durchflussstromes ist. Viele Rotoren sind hierfür aus einem magnetischen Stoff hergestellt oder mit einem solchen ausgestattet.

Druckschriften EP 1 464 927 A2 und US 2 709 755 A offenbaren jeweils einen Turbinendurchflussmesser, dessen Rotor sich axial bewegen kann.

Die US 5 372 048 offenbart einen Rotor, welcher einen aus Plastik gefertigten Ringteil mit magnetischen Punkten aufweist. Der Rotor rotiert um seine Achse und ist entlang dieser bewegbar.

Bisher bekannte Turbinendurchflussmesser können entweder sehr kleine Durchflussströme messen oder sehr große. Dabei sind ein geringer Druckabfall und eine möglichst hohe Messgenauigkeit erwünscht.

### Offenbarung der Erfindung

Der erfindungsgemäße Turbinendurchflussmesser gemäß den Merkmalen des Hauptanspruchs ermöglicht die genaue Messung von geringen und hohen Durchflussmengen. Erfindungsgemäß umfasst der Turbinendurchflussmesser ein Gehäuse mit einer Mantelfläche, mit mindestens einer Zuflussöffnung und mit mindestens einer Abflussöffnung und ein in dem Gehäuse befindlicher Körper, umfassend mindestens ein einen Rotor haltendes Befestigungsteil, wobei der Rotor mit oder auf einer Achse verschiebbar und/oder drehbar ist. Der Turbinendurchflussmesser zeichnet sich dadurch aus, dass der Rotor ein durchgehendes Signalgeberband und/oder ein Signalgeberband mit einem alternierenden Muster aufweist.

Durch die in den Unteransprüchen aufgeführten Merkmale sind vorteilhafte Weiterbildungen des erfindungsgemäßen Turbinendurchflussmessers nach dem Hauptanspruch möglich.

Das durchgehende Signalgeberband und/oder das Signalgeberband mit dem alternierenden Muster sind entlang des Umfangs des Rotors angeordnet. Dies hat den Vorteil, dass gemäß der Bewegung des Rotors Signale von den Signalgeberbändern abgegeben werden können, was eine akkurate Messung ermöglichen kann.

Der Rotor kann einteilig ausgebildet sein, insbesondere aus einem Polymerwerkstoff. Dies hat den Vorteil, dass Produktionskosten gesenkt werden können. Ist der Rotor aus einem Polymerwerkstoff gearbeitet, so kann sich sein Gewicht maßgeblich reduzieren, was das Gesamtgewicht des Turbinendurchflussmessers maßgeblich verringert.

Der Rotor weist einen Stift und einen am Stift angebrachten Körper, insbesondere einen zylinderförmigen Körper, auf. Dies ist vorteilhaft, da der Stift sicher innerhalb des im Gehäuse befindlichen Körpers befestigt werden kann. Weiter kann dies die Bewegungsdynamik des Rotors den Erfordernissen entsprechend begünstigen und erweitern, so dass die Messgenauigkeit des Turbinendurchflussmessers verbessert werden kann.

Hierfür ist es auch von Vorteil, wenn der Rotor, umfassend den Stift und den Körper, eine bauliche Einheit bildet.

Für die Bewegungsdynamik des Rotors kann es auch vorteilhaft sein, wenn der Rotor, umfassend den Stift und den Körper, zweiteilig aufgebaut ist, wobei der Körper entlang des Stifts verschiebbar und/oder drehbar ist. Je nachdem, welche Erfordernisse gerade vorliegen, kann die eine oder andere Bauart von Vorteil sein, was mehr Flexibilität bietet.

Ebenso ist es von Vorteil, wenn der Stift des Rotors radial und/oder longitudinal beweglich ist.

An der Mantelfläche des Gehäuses sind mindestens ein erster Sensor und ein zweiter Sensor angebracht. Dies bietet den Vorteil, dass diese Sensoren von den Signalgeberbändern kommende Signale empfangen und weiterleiten können.

Der Rotor nimmt eine Ruheposition und eine Arbeitsposition ein. Er befindet sich in einer Ruheposition, wenn das durchgehende Signalgeberband außerhalb des detektierenden Bereichs des ersten Sensors liegt. Dies hat den Vorteil, dass der erste Sensor keine von einem der Signalgeberbänder kommenden Signale fälschlicherweise empfangen kann, was das Messergebnis verfälschen würde.

Der Rotor befindet sich in einer Arbeitsposition, wenn sich der erste Sensor auf Höhe des durchgehenden Signalgeberbandes und der zweite Sensor auf Höhe des Signalgeberbandes mit dem alternierenden Muster befindet. Der erste Sensor kann so Signale von dem durchgehenden Signalgeberband, der zweite Sensor von dem Signalgeberband mit dem alternierenden Muster empfangen. Die Sensoren können also genau dann Signale empfangen, wenn der Rotor tatsächlich in Bewegung ist, das heißt, wenn ein Durchflussstrom vorhanden ist. Dies kann die Messgenauigkeit des Turbinendurchflussmessers erhöhen.

Um von der Ruheposition in die Arbeitsposition wechseln zu können, ist es von Vorteil, wenn der Rotor entlang der Achse verschiebbar ist, so dass der Rotor durch Verschiebung mit oder auf der Achse von der Ruheposition in die Arbeitsposition gebracht werden kann.

Der Vorteil hiervon liegt darin, dass nun der erste Sensor zusammen mit dem durchgehenden Signalgeberband eine, auch geringe, Anwesenheit eines Durchflusses feststellen kann.

Der zweite Sensor zusammen mit dem Signalgeberband mit dem alternierenden Muster kann den Durchflussstrom messen. Der Turbinendurchflussmesser kann so schon geringe Durchflussströme feststellen und darüber hinaus den Durchflussstrom mit einer hohen Messgenauigkeit bestimmen.

Der erste Sensor und/oder der zweite Sensor können mit einer Einheit verbunden sein, die die gemessenen Signale verarbeitet. Dadurch können die gemessenen Signale sofort ausgewertet werden.

Es ist vorteilhaft, wenn das Signalgeberband ein magnetisches Band ist, wobei das alternierende Muster des Signalgeberbandes derart gestaltet ist, dass sich magnetische Bereiche mit nichtmagnetischen Bereichen abwechseln, oder dass sich magnetische Pole abwechseln.

Der erste Sensor und/oder der zweite Sensor können mit einem Schutzbereich versehen sein, um mögliche Intereferenzen oder Störsignale zwischen den Sensoren zu verhindern. Gleichzeitig dient der Schutzbereich zur leichteren und flexibleren Fixierung der Sensoren.

Weiter kann es, abhängig von den Erfordernissen, vorteilhaft sein, wenn der Körper des Rotors einen ersten Teil und einen zweiten Teil aufweist, wobei der erste Teil und der zweite Teil rotierbar um die Achse sind. Weiter ist in diesem Fall der erste Teil axial fixiert, so dass sich das Signalgeberband mit dem alternierenden Muster unverändert auf Höhe des zweiten Sensors befindet. Der zweite Teil des Körpers kann sich zusätzlich entlang der Achse bewegen.

Die Anordnung des erfindungsgemäßen Turbinendurchflussmesser ist so getroffen, dass bereits sehr kleine Durchflussströme festgestellt und gemessen werden können, wobei gleichzeitig sehr hohe Durchflussströme gehandhabt werden können. Dabei ist es von Vorteil, wenn der Rotor bei 0,1l/min, bevorzugt bei 0,2l/min, in die Arbeitsposition gebracht wird und die Messung des Durchflussstroms bis 40l/min, bevorzugt bis 30l/min, beherrschbar ist.

Durch den oben geschilderten Aufbau des Turbinendurchflussmessers kann auch verhindert werden, dass es zu großen Druckabfällen nach Durchtritt des Wassers durch den Turbinendurchflussmesser kommt.

### Zeichnung

In den Figuren sind schematische Darstellungen eines erfindungsgemäßen Turbinendurchflussmessers zu sehen. Es zeigen
Figur 1 ein erstes Ausführungsbeispiel eines erfindungsgemäßen Turbinendurchflussmessers in einer Ruheposition,
Figur 2 in einer Arbeitsposition,
Figur 3 in einer Draufsicht auf eine Zuflussöffnung des Turbinendurchflussmessers,
Figur 4 mit einer Einheit zum Verbinden mit einem zum Turbinendurchflussmesser gehörenden ersten und zweiten Sensor,
Figur 5 ein zweites Ausführungsbeispiel eines erfindungsgemäßen Turbinendurchflussmessers in der Ruheposition,
Figur 6 in der Arbeitsposition,
Figur 7 ein drittes Ausführungsbeispiel eines erfindungsgemäßen TurbinendurchflussMessers in der Ruheposition,
Figur 8 in der Arbeitsposition.

### Beschreibung der Zeichnungen

In den Figuren sind unterschiedliche Turbinendurchflusszähler dargestellt, wobei gleichen Baukomponenten gleiche Bezugszahlen zugeordnet sind.

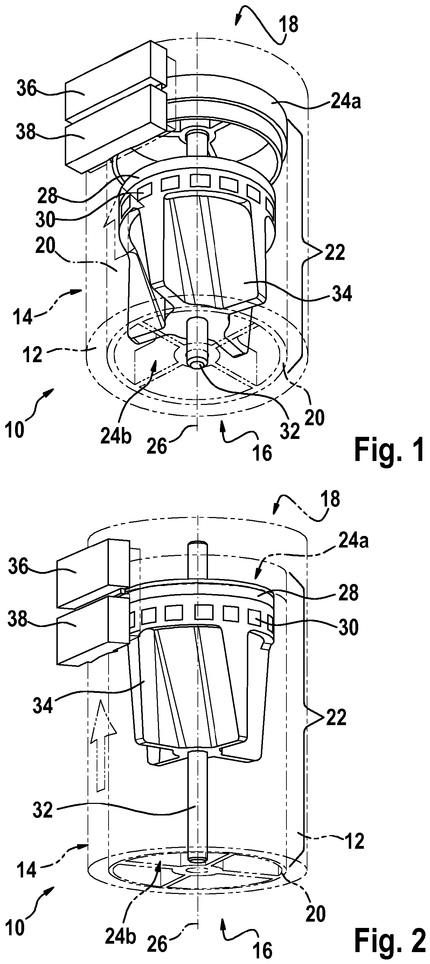

Figur 1 zeigt ein erste Ausführungsbeispiel eines Turbinenradzählers 10, welcher ein Gehäuse 12 mit einer Mantelfläche 14 umfasst. Das Gehäuse 12 weist eine Zuflussöffnung 16 und eine Abflussöffnung 18 auf, wobei Wasser durch die Zuflussöffnung 16 in den Turbinenradzähler 10 eintritt und über die Abflussöffnung 18 wieder heraustritt.

In dem Gehäuse 12 befindet sich ein Körper 20, welcher ein Befestigungsteil 24 aufweist. Im Ausführungsbeispiel besteht das Befestigungsteil 24 aus einem ersten Abschnitt 24a und einem zweiten Abschnitt 24b. Weiter befindet sich in dem Körper 20 ein Rotor 22, welcher an das Befestigungsteil 24 angebracht ist. Der Rotor 22 ist um eine Achse 26 rotierbar und entlang dieser in longitudinaler Richtung verschiebbar.

Der Rotor 22 besteht aus einem Stift 32 und einem Körper 34. Der Körper 34 ist zylinderförmig und weist vier Rotorenblätter auf. Der Rotor 22 ist aus einem Teil und aus Polymerwerkstoff gefertigt, das heißt, der Körper 34 und der Stift 32 bilden eine bauliche Einheit. Aufgrund des Poylmerwerkstoffs ist das Gewicht des Turbinendurchflussmessers 10 geringer, im Gegensatz zu einem aus einem metallischen Material gefertigten Rotor 22. Der Körper 34 und der Stift 32 sind drehbar um die Achse 26 und entlang dieser verschiebbar. Das Befestigungsteil 24 weist hierfür im ersten Abschnitt 24a und im zweiten Abschnitt 24b jeweils eine Öffnung auf, durch welche der Stift 32 führbar ist, so dass sich der Rotor 22 wie oben beschrieben bewegen kann.

Alternativ kann der Rotor 22, umfassend den Stift 32 und den Körper 34, zweiteilig gearbeitet sein, so dass der Körper 34 rotierbar um den Stift 32 und longitudinal entlang des Stifts 32 verschiebbar ist. Der Stift 32 selbst kann ebenfalls um die Achse 26 rotieren und ist entlang dieser verschiebbar.

Zur Abflussöffnung 18 zeigend befindet sich am Körper 34 des Rotors 22 ein durchgehendes Signalgeberband 28, welches den Umfang des Körpers 34 umläuft. Darunter ist ein weiteres Signalgeberband 30 mit einem alternierenden Muster angebracht, welches ebenfalls den Körper 34 umläuft.

Das durchgehende Signalgeberband 28 ist ein aus einem magnetischen Material gefertigtes Band. Das alternierende Muster des Signalgeberbandes 30 ist derart gestaltet, dass sich magnetische Bereiche mit nichtmagnetischen Bereichen abwechseln. Alternativ ist es so gestaltet, dass sich magnetische Pole abwechseln.

An der Mantelfläche 14 des Gehäuses 10 sind in Richtung der Abflussöffnung ein erster Sensor 36 und ein zweiter Sensor 38 angebracht. Diese Sensoren 36, 38 empfangen von den Signalgeberbändern 28, 30 kommende Signale. Die Signale werden ausgewertet und geben eine Anwesenheit und/oder die Größe des Durchflusstromes an.

Der Rotor 22 kann sich in zwei Positionen befinden. Figur 1 zeigt den Rotor 22 in seiner Ruheposition. Hier ist der Rotor 22 derart in Richtung der Zuflussöffnung 16 entlang der Achse 26 verschoben, dass sich die beiden Signalbänder 28, 30 nicht auf Höhe der beiden Sensoren 36, 38 befinden, so dass die Sensoren 36, 30 von den Signalgeberbändern 28, 30 keine Signale empfangen können.

Die zweite Position des Rotors 22 ist in Figur 2 dargestellt. Hier befindet sich der Rotor 22 in seiner Arbeitsposition. In seiner Arbeitsposition befindet sich das durchgehende Signalgeberband 28 auf Höhe des ersten Sensors 36 und das Signalgeberband 30 mit dem alternierenden Muster auf Höhe des zweiten Sensors 38.

Der Rotor 22 befindet sich in der Ruheposition, wenn kein Durchflussstrom vorhanden ist oder wenn er so gering ist, dass er den Rotor 22 nicht in Richtung der Abflussöffnung 18 verschieben kann, so dass sich das durchgehende Signalgeberband 28 außerhalb des detektierenden Bereiches des ersten Sensors 36 und das Signalgeberband 30 außerhalb des detektierenden Bereiches des zweiten Sensors 38 befinden.

Ist der Durchflussstrom stark genug, um das durchgehende Signalgeberband 28 auf Höhe des ersten Sensors 36 in Richtung der Abflussöffnung 18 zu verschieben, so empfängt der erste Sensor 36 ein vom Signalgeberband 28 kommendes Signal, das dadurch anzeigt, dass ein Durchflussstrom vorhanden ist. Dieser ist zumindest so stark, dass er den Rotor 22 in Richtung der Abflussöffnung 18 verschieben kann. Er kann jedoch noch so schwach sein, dass sich das Signalgeberband 30 mit dem alternierenden Muster nicht oder kaum dreht, so dass der zweite Sensor 38 kein vom Signalgeberband 30 mit dem alternierenden Muster kommendes Signal empfängt.

Sobald der Durchflussstrom stark genug ist, um den Rotor 22 und damit das Signalgeberband 30 mit dem alternierenden Muster in rotierende Bewegung zu versetzen, beginnt die Messung der Stärke bzw. Geschwindigkeit des Durchflusstromes. Hierbei empfängt der zweite Sensor 38 immer dann ein Signal, wenn ein magnetisierter Bereich am sensitiven Feld des zweiten Sensors 38 vorbeikommt. Hierduch wird die Drehzahl des Rotors 22 erfasst, welche zumindest annähernd proportional zur Geschwindigkeit des Durchflusstromes ist.

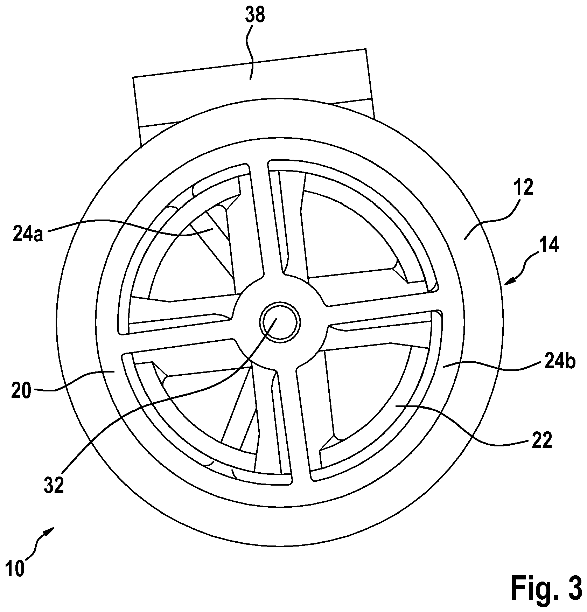

Figur 3 zeigt eine Draufsicht auf die Zuflussöffnung 16 des Turbinendurchflussmessers 10 aus dem ersten Ausführungsbeispiel (Figuren 1 und 2). Erkennbar sind das Gehäuse 12 mit seiner Mantelfläche 14, der Körper 20, das Befestigungsteil 24 mit dem ersten Abschnitt 24a und dem zweiten Abschnitt 24b, der Rotor 22 mit seinem Stift 32. An der Mantelfläche 14 angebracht sieht man den zweiten Sensor 38.

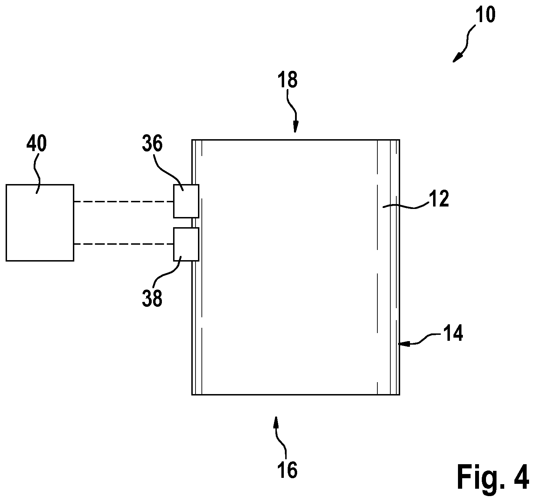

Figur 4 zeigt eine skizzenhafte Darstellung des Turbinendurchflussmessers 10 mit seinem Gehäuse 12 und der Mantelfläche 14, an welcher der erste Sensor 36 und der zweite Sensor 38 angebracht sind. Diese sind mit einer Einheit 40 verbunden, welche die von den Sensoren 36, 38 kommenden Signale verarbeitet und auswertet. Diese Einheit 40 kann mit einer Anzeige ausgestattet sein, welche die Geschwindigkeit des Durchflussstromes anzeigt. Weiter kann die Einheit 40 Messbilder der unterschiedlichen Durchflussmessungen zur weiteren Verarbeitung zur Verfügung stellen.

Alternativ kann die Anzeige an einer anderen Stelle angebracht sein, zum Beispiel an der Mantelfläche 14 des Turbinendurchflussmessers 10.

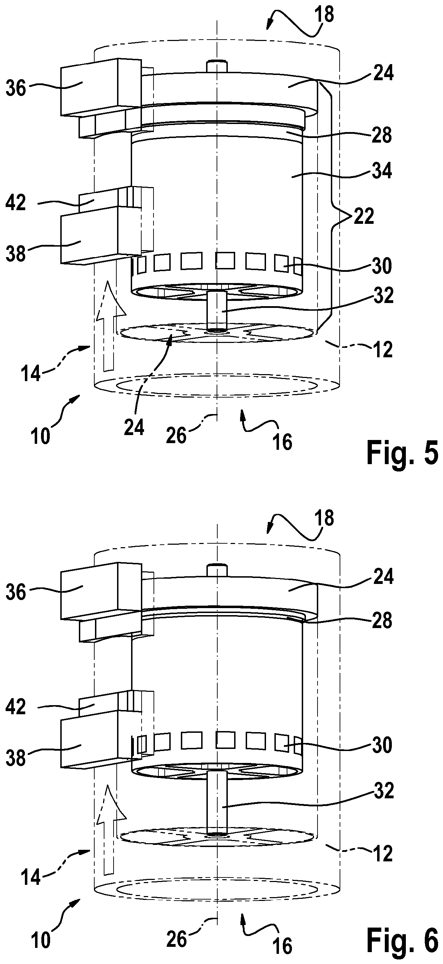

Figur 5 zeigt ein zweites Ausführungsbeispiel des Turbinendurchflussmessers 10 in seiner Ruheposition.

Der erste Sensor 36 befindet sich hierbei in der Nähe der Abflussöffnung 18, der zweite Sensor 38 in der Nähe der Zuflussöffnung 16. Entsprechend ist das durchgehende Signalgeberband 28 in Richtung der Abflussöffnung 18, das Signalgeberband 30 mit dem alternierenden Muster in Richtung der Zuflussöffnung 16 angebracht. Weiter ist an die Mantelfläche 14 ein Schutzbereich 42 angebracht, welcher zum einen eine sichere Fixierung der Sensoren 36, 38 ermöglicht, zum anderen vor Störungen zwischen den Sensoren 36, 38 schützen soll.

Wie schon oben beschrieben, befindet sich das Signalgeberband 28 in der Ruheposition nicht auf Höhe des ersten Sensors 26, das heißt, der Rotor 22 ist in Richtung der Zuflussöffnung 16 verschoben.

In der Arbeitsposition, wie in Figur 6 dargestellt, ist der Rotor 22 in Richtung der Abflussöffnung entlang der Achse 26 verschoben, so dass sich die beiden Signalbänder 28, 30 auf Höhe der beiden Sensoren 36, 38 befinden.

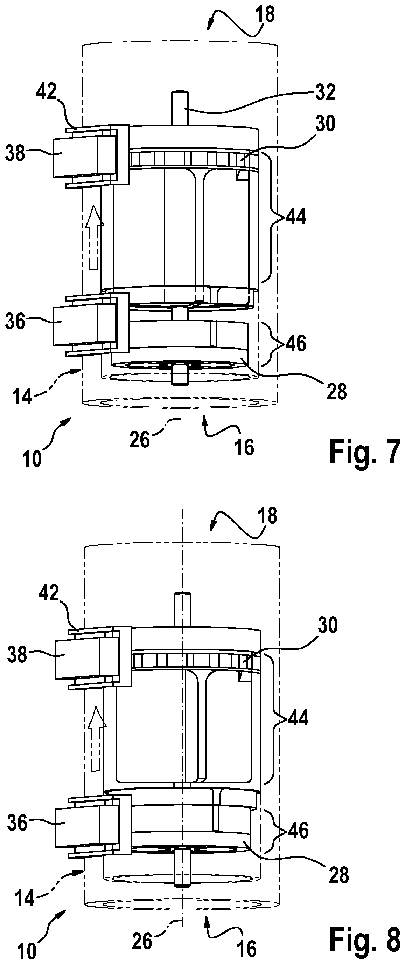

Figur 7 zeigt ein drittes Ausführungsbeispiel des Turbinendurchschlussmessers 10 in der Ruheposition. Hier befinden sich das Signalgeberband 30 mit dem alternierenden Muster und der zweite Sensor 38 in der Nähe der Abflussöffnung 18, das durchgehende Signalgeberband 28 und der erste Sensor 36 in Richtung der Zuflussöffnung 16.

Der Rotor 22 weist den Körper 20 und den Stift 32 auf, wobei der Körper 20 zweiteilig gefertigt ist und einen ersten Teil 44 und einen zweiten Teil 46 aufweist. Der erste Teil 44 und der zweite Teil 46 können um die Achse 26 rotieren. Während der erste Teil 44 axial fixiert ist, so dass sich das Signalgeberband 30 mit dem alternierenden Muster unverändert und unabhängig vom Durchflussstrom auf Höhe des zweiten Sensors 38 befindet, ist der zweite Teil 46 des Körpers 20 zusätzlich entlang der Achse beweglich. So befindet sich das durchgehende Signalgeberband 28 in der Ruheposition nicht auf Höhe des ersten Sensors 36.

Figur 8 zeigt den Turbinendurchflussmesser 10 von Figur 7 in der Arbeitsposition. Hierbei ist der Durchflussstrom stark genug, um den zweiten Teil 46 des Körpers 20 in Richtung der Abflussöffnung 18 entlang der Achse 26 zu verschieben, bis sich das durchgehende Signalgeberband 28 auf Höhe des ersten Sensors 36 befindet.

Die Messung des Durchflussstromes läuft analog zu den oben geschilderten Ausführungsbeispielen ab.

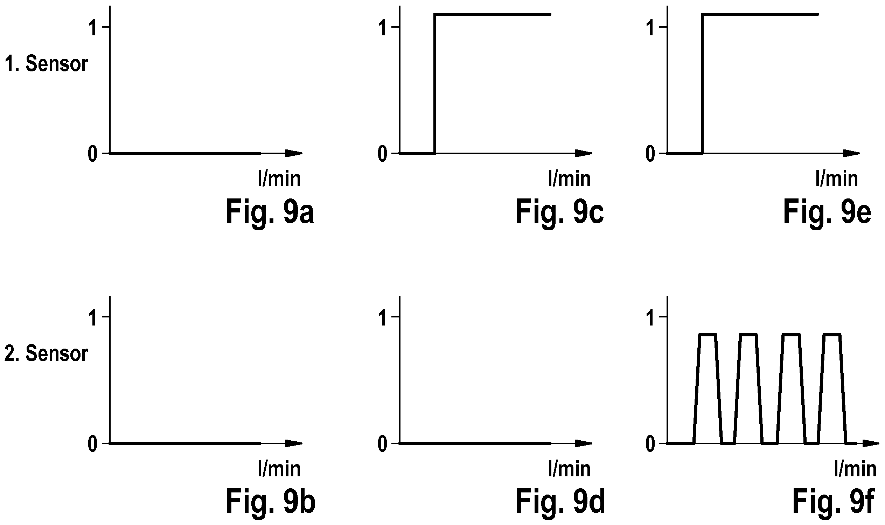

Figuren 9a bis 9f zeigen ein zum Turbinendurchflussmesser 10 gehörendes Messdiagramm. Figur 9a zeigt das Messsignal des ersten Sensors 36 bei einem nicht vorhandenen oder zu geringem Durchflussstrom. In diesem Fall befindet sich das durchgehende Signalgeberband 28 nicht im Empfangsbereich des ersten Sensors 36, und der Rotor 22 des Turbinendurchflussmessers 10 ist in Ruheposition.

Auch das alternierende Signalgeberband 30 befindet sich nicht im Empfangsbereich des zweiten Sensors 38, so dass der zweite Sensor 38, wie in Figur 9b gezeigt, kein Signal empfängt.

Figur 9c zeigt den Fall, dass der erste Sensor 36 ein Signal empfängt. Der Druchflussstrom ist stark genug, den Rotor 22 in Arbeitsposition zu schieben, so dass sich das durchgehende Signalgeberband 28 im Empfangsbereich des ersten Sensors 36 befindet.

Der zweite Sensor 38 empfängt hierbei kein Signal, wie in Figur 9d dargestellt. Der Durchflussstrom ist noch zu schwach, um das alternierende Signalgeberband 30 in Bewegung zu versetzen.

Figur 9e und Figur 9f zeigen den Fall, dass der Rotor 22 sich in Arbeitsposition befindet, der erste Sensor 36 ein Signal vom durchgehenden Signalgeberband 28 und der zweite Sensor 38 ein Signal vom alternierenden Signalgeberband 30 erhält.

Die in den Ausführungsbeispielen beschriebenen Turbinendurchflussmesser 10 ermöglichen eine Durchflussstrommessung beginnend bei einem Durchflussstrom von 0,1l/min, bevorzugt bei 0,2l/min, bis zu 40l/min, bevorzugt bis zu 30l/min. Der Druckabfall nach Durchtritt des Wassers durch den Turbinendurchflussmesser ist reduziert.

## Patentansprüche

1. Turbinendurchflussmesser (10), umfassend ein Gehäuse (12) mit einer Mantelfläche (14), mit mindestens einer Zuflussöffnung (16) und mit mindestens einer Abflussöffnung (18) und ein in dem Gehäuse (12) befindlicher Körper (20), umfassend mindestens ein einen Rotor (22) haltendes Befestigungsteil (24), wobei der Rotor (22) mit oder auf einer Achse (26) verschiebbar und drehbar ist, und wobei der Rotor (22) ein durchgehendes Signalgeberband (28) und ein Signalgeberband (30) mit einem alternierenden Muster aufweist, **dadurch gekennzeichnet, dass** an der Mantelfläche (14) des Gehäuses (12) mindestens ein erster Sensor (36) und ein zweiter Sensor (38) angebracht sind, wobei sich der Rotor (22) in einer Arbeitsposition befindet, wenn sich der erste Sensor (36) auf Höhe des durchgehenden Signalgeberbandes (28) und der zweite Sensor (38) auf Höhe des Signalgeberbandes (30) mit dem alternierenden Muster befindet.

2. Turbinendurchflussmesser(10) nach Anspruch 1, **dadurch gekennzeichnet, dass** das durchgehende Signalgeberband (28) und das Signalgeberband (30) mit dem alternierenden Muster entlang des Umfangs des Rotors (22) angeordnet sind.

3. Turbinendurchflussmesser (10) nach Anspruch 1 oder 2, **dadurch gekennzeichnet, dass** der Rotor (22) einteilig ausgebildet ist, insbesondere aus einem Polymerwerkstoff.

4. Turbinendurchflussmesser (10) nach einem der Ansprüche 1 bis 3, **dadurch gekennzeichnet, dass** der Rotor (22) einen Stift (32) und einen am Stift (32) angebrachten Körper (34), insbesondere einen zylinderförmigen Körper, aufweist.

5. Turbinendurchflussmesser (10) nach Anspruch 4, **dadurch gekennzeichnet, dass** der Rotor (22), umfassend den Stift (32) und den Körper (34), eine bauliche Einheit bildet.

6. Turbinendurchflussmesser (10) nach einem der Ansprüche 4 oder 5, **dadurch gekennzeichnet, dass** der Rotor (22), umfassend den Stift (32) und den Körper (34), zweiteilig aufgebaut ist.

7. Turbinendurchflussmesser (10) nach einem der Ansprüche 4 bis 6, **dadurch gekennzeichnet, dass** der Stift (32) des Rotors (22) drehbar um die Achse (26) und entlang dieser verschiebbar ist.

8. Turbinendurchflussmesser (10) nach einem der Ansprüche 1 bis 7, **dadurch gekennzeichnet, dass** sich der Rotor (22) in einer Ruheposition befindet, wenn das durchgehende Signalgeberband außerhalb des detektierenden Bereichs des ersten Sensors liegt.

9. Turbinendurchflussmesser (10) nach Anspruch 7, **dadurch gekennzeichnet, dass** der Rotor (22) durch Verschiebung mit oder auf der Achse (26) von der Ruheposition in die Arbeitsposition gebracht werden kann.

10. Turbinendurchflussmesser (10) nach einem der Ansprüche 1 oder 9, **dadurch gekennzeichnet, dass** der erste Sensor (36) zusammen mit dem durchgehenden Signalgeberband (28) eine Anwesenheit eines Durchflusses feststellt.

11. Turbinendurchflussmesser (10) nach einem der Ansprüche 1 bis 10, **dadurch gekennzeichnet, dass** der zweite Sensor (38) zusammen mit dem Signalgeberband (30) mit dem alternierenden Muster den Durchflussstrom misst.

12. Turbinendurchflussmesser (10) nach einem der Ansprüche 1 bis 11, **dadurch gekennzeichnet, dass** der erste Sensor (36) und der zweite Sensor (38) mit einer Einheit (40) verbunden sind, die die gemessenen Signale verarbeitet.

13. Turbinendurchflussmesser (10) nach einem der Ansprüche 1 bis 12, **dadurch gekennzeichnet, dass** das Signalgeberband (28, 30) ein magnetisches Band ist, wobei das alternierende Muster des Signalgeberbandes (30) derart gestaltet ist, dass sich magnetische Bereiche mit nichtmagnetischen Bereichen abwechseln, oder dass sich magnetische Pole abwechseln.

14. Turbinendurchflussmesser (10) nach einem der Ansprüche 1 bis 13, **dadurch gekennzeichnet, dass** der erste Sensor (36) und/oder der zweite Sensor (38) mit einem Schutzbereich (42) versehen sind.

15. Turbinendurchflussmesser (10) nach einem der Ansprüche 1 bis 14, **dadurch gekennzeichnet, dass** der Körper (20) des Rotors (22) einen ersten Teil (44) und einen zweiten Teil (46) aufweist, wobei der erste Teil (44) und der zweite Teil (46) rotierbar um die Achse (26) sind, wobei der erste Teil (44) axial fixiert ist, so dass sich das Signalgeberband (30) mit dem alternierenden Muster unverändert auf Höhe des zweiten Sensors (38) befindet, und wobei der zweite Teil (46) zusätzlich entlang der Achse (26) beweglich ist.

16. Turbinendurchflussmesser (10) nach einem der Ansprüche 1 bis 15, **dadurch gekennzeichnet, dass** der Rotor (22) bei 0,1l/min, bevorzugt bei 0,2l/min, in die Arbeitsposition gebracht werden kann und die Messung des Durchflussstroms bis 40l/min, bevorzugt bis 30l/min, möglich ist.

## Claims

1. Turbine throughflow meter (10) comprising a housing (12) which has a casing surface (14), has at least one inflow opening (16) and has at least one outflow opening (18), and a body (20) which is situated in the housing (12) and which comprises at least one fastening part (24) which holds a rotor (22), wherein the rotor (22) is displaceable and rotatable with or on an axis (26), and wherein the rotor (22) has a continuous signal transducer strip (28) and a signal transducer strip (30) with an alternating pattern, **characterized in that** at least one first sensor (36) and one second sensor (38) are affixed to the casing surface (14) of the housing (12), wherein the rotor (22) is situated in a working position when the first sensor (36) is situated at the height of the continuous signal transducer strip (28) and the second sensor (38) is situated at the height of the signal transducer strip (30) with the alternating pattern.

2. Turbine throughflow meter (10) according to Claim 1, **characterized in that** the continuous signal transducer strip (28) and the signal transducer strip (30) with the alternating pattern are arranged along the circumference of the rotor (22).

3. Turbine throughflow meter (10) according to Claim 1 or 2, **characterized in that** the rotor (22) is formed as one part, in particular from a polymer material.

4. Turbine throughflow meter (10) according to one of Claims 1 to 3, **characterized in that** the rotor (22) has a pin (32) and a body (34) affixed to the pin (32), in particular a cylindrical body.

5. Turbine throughflow meter (10) according to Claim 4, **characterized in that** the rotor (22), comprising the pin (32) and the body (34), forms a structural unit.

6. Turbine throughflow meter (10) according to either of Claims 4 and 5, **characterized in that** the rotor (22), comprising the pin (32) and the body (34), is of two-part construction.

7. Turbine throughflow meter (10) according to one of Claims 4 to 6, **characterized in that** the pin (32) of the rotor (22) is rotatable about the axis (26) and displaceable therealong.

8. Turbine throughflow meter (10) according to one of Claims 1 to 7, **characterized in that** the rotor (22) is situated in a rest position when the continuous signal transducer strip is situated outside the detecting region of the first sensor.

9. Turbine throughflow meter (10) according to Claim 7, **characterized in that** the rotor (22) can be brought from the rest position into the working position by displacement with or on the axis (26).

10. Turbine throughflow meter (10) according to one of Claims 1 to 9, **characterized in that** the first sensor (36), together with the continuous signal transducer strip (28), detects a presence of a throughflow.

11. Turbine throughflow meter (10) according to one of Claims 1 to 10, **characterized in that** the second sensor (38), together with the signal transducer strip (30) with the alternating pattern, measures the throughflow rate.

12. Turbine throughflow meter (10) according to one of Claims 1 to 11, **characterized in that** the first sensor (36) and the second sensor (38) are connected to a unit (40) which processes the measured signals.

13. Turbine throughflow meter (10) according to one of Claims 1 to 12, **characterized in that** the signal transducer strip (28, 30) is a magnetic strip, wherein the alternating pattern of the signal transducer strip (30) is formed such that magnetic regions alternate with non-magnetic regions, or such that magnetic poles alternate.

14. Turbine throughflow meter (10) according to one of Claims 1 to 13, **characterized in that** the first sensor (36) and/or the second sensor (38) are/is provided with a protection region (42).

15. Turbine throughflow meter (10) according to one of Claims 1 to 14, **characterized in that** the body (20) of the rotor (22) has a first part (44) and a second part (46), wherein the first part (44) and the second part (46) are rotatable about the axis (26), wherein the first part (44) is axially fixed, so that the signal transducer strip (30) with the alternating pattern is situated unchanged at the height of the second sensor (38), and wherein the second part (46) is additionally movable along the axis (26).

16. Turbine throughflow meter (10) according to one of Claims 1 to 15, **characterized in that** the rotor (22) can be brought into the working position at 0.1 1/min, preferably at 0.2 1/min, and the measurement of the throughflow rate is possible up to 40 1/min, preferably up to 30 1/min.

## Revendications

1. Débitmètre à turbine (10), comprenant un boîtier (12) muni d'une enveloppe (14), muni d'au moins une ouverture d'afflux (16) et muni d'au moins une ouverture d'écoulement (18) et un corps (20) qui se trouve dans le boîtier (12), comprenant au moins une partie de fixation (24) qui maintient un rotor (22), le rotor (22) pouvant coulisser et pouvant tourner avec ou sur un axe (26), et le rotor (22) possédant une bande transmettrice de signal continue (28) et une bande transmettrice de signal (30) ayant un modèle alterné, **caractérisé en ce qu'**au moins un premier capteur (36) et un deuxième capteur (38) sont montés sur l'enveloppe (14) du boîtier (12), le rotor (22) se trouvant dans une position de travail lorsque le premier capteur (36) se trouve à hauteur de la bande transmettrice de signal continue (28) et le deuxième capteur (38) se trouve à hauteur de la bande transmettrice de signal (30) ayant le modèle alterné.

2. Débitmètre à turbine (10) selon la revendication 1, **caractérisé en ce que** la bande transmettrice de signal continue (28) et la bande transmettrice de signal (30) ayant le modèle alterné sont disposées le long du pourtour du rotor (22).

3. Débitmètre à turbine (10) selon la revendication 1 ou 2, **caractérisé en ce que** le rotor (22) est réalisé d'un seul tenant, notamment en un matériau polymère.

4. Débitmètre à turbine (10) selon l'une des revendications 1 à 3, **caractérisé en ce que** le rotor (22) possède une broche (32) et un corps (34) monté sur la broche (32), notamment un corps cylindrique.

5. Débitmètre à turbine (10) selon la revendication 4, **caractérisé en ce que** le rotor (22) qui comprend la broche (32) et le corps (34) forme une unité constructive.

6. Débitmètre à turbine (10) selon l'une des revendications 4 ou 5, **caractérisé en ce que** le rotor (22) qui comprend la broche (32) et le corps (34) est construit en deux parties.

7. Débitmètre à turbine (10) selon l'une des revendications 4 à 6, **caractérisé en ce que** la broche (32) du rotor (22) est rotative autour de l'axe (26) et peut coulisser le long de celui-ci.

8. Débitmètre à turbine (10) selon l'une des revendications 1 à 7, **caractérisé en ce que** le rotor (22) se trouve dans une position de repos lorsque la bande transmettrice de signal continue est située en-dehors de la zone de détection du premier capteur.

9. Débitmètre à turbine (10) selon la revendication 7, **caractérisé en ce que** le rotor (22) peut être amené de la position de repos dans la position de travail par coulissement avec ou sur l'axe (26).

10. Débitmètre à turbine (10) selon l'une des revendications 1 à 9, **caractérisé en ce que** le premier capteur (36), en association avec la bande transmettrice de signal continue (28), constate une présence d'un débit.

11. Débitmètre à turbine (10) selon l'une des revendications 1 à 10, **caractérisé en ce que** le deuxième capteur (38), en association avec la bande transmettrice de signal (30) ayant le modèle alterné, mesure le débit.

12. Débitmètre à turbine (10) selon l'une des revendications 1 à 11, **caractérisé en ce que** le premier capteur (36) et le deuxième capteur (38) sont reliés à une unité (40) qui traite les signaux mesurés.

13. Débitmètre à turbine (10) selon l'une des revendications 1 à 12, **caractérisé en ce que** la bande transmettrice de signal (28, 30) est une bande magnétique, le modèle alterné de la bande transmettrice de signal (30) étant configuré de telle sorte que des zones magnétiques alternent avec des zones non magnétiques et que des pôles magnétiques s'alternent.

14. Débitmètre à turbine (10) selon l'une des revendications 1 à 13, **caractérisé en ce que** le premier capteur (36) et/ou le deuxième capteur (38) sont pourvus d'une zone de protection (42).

15. Débitmètre à turbine (10) selon l'une des revendications 1 à 14, **caractérisé en ce que** le corps (20) du rotor (22) possède une première partie (44) et une deuxième partie (46), la première partie (44) et la deuxième partie (46) pouvant effectuer une rotation autour de l'axe (26), la première partie (44) étant immobilisée axialement de sorte que la bande transmettrice de signal (30) ayant le modèle alterné se trouve de manière inchangée à hauteur du deuxième capteur (38) et la deuxième partie (46) étant en plus mobile le long de l'axe (26).

16. Débitmètre à turbine (10) selon l'une des revendications 1 à 15, **caractérisé en ce que** le rotor (22) peut être amené dans la position de travail à 0,1 1/min, de préférence à 0,2 1/min et la mesure du débit est possible jusqu'à 40 1/min, de préférence jusqu'à 30 1/min.
